# EUROPEAN PATENT SPECIFICATION

(11) **EP 4 058 874 B1**
(45) Date of publication and mention of the grant of the patent: **18.03.2026**
(21) Application number: 20896111.0
(22) Date of filing: 02.12.2020
(51) Int. Cl.: G06T 7/73, G06T 7/80, G06F 3/01

(54) **METHOD AND SYSTEM FOR ASSOCIATING DEVICE COORDINATE SYSTEMS IN A MULTI-PERSON AR SYSTEM**
VERFAHREN UND SYSTEM ZUM ZUORDNEN VON GERÄTENKOORDINATENSYSTEMEN IN EINEM AR-SYSTEM MIT MEHREREN PERSONEN
PROCÉDÉ ET SYSTÈME D'ASSOCIATION DE SYSTÈMES DE COORDONNÉES DE DISPOSITIF DANS UN SYSTÈME DE RA À PLUSIEURS PERSONNES

(30) Priority: 05.12.2019 US 201962944131 P
(43) Date of publication of application: 21.09.2022
(73) Proprietor: GUANGDONG OPPO MOBILE TELECOMMUNICATIONS CORP., LTD., Dongguan, Guangdong 523860 (CN)
(72) Inventor: XU, Yi, Palo Alto, California 94303 (US)
(74) Representative: Mewburn Ellis LLP
(86) International application number: PCT/CN2020/133384
(87) International publication number: WO 2021/110051

(56) References cited:
- EP-A1- 3 330 926
- WO-A1-2017/027338
- CN-A- 108 932 051
- US-A1- 2012 210 255
- US-A1- 2013 235 078
- US-A1- 2014 002 597
- US-A1- 2016 065 903
- US-A1- 2016 343 137
- PEARS N ET AL: "Smart Phone Interaction with Registered Displays", IEEE PERVASIVE COMPUTING, IEEE SERVICE CENTER, LOS ALAMITOS, CA, US, vol. 8, no. 2, 1 April 2009 (2009-04-01), pages 14 - 21, XP011255509, ISSN: 1536-1268
- ANONYMOUS: "Perspective-n-Point - Wikipedia", 27 October 2016 (2016-10-27), XP055784893, Retrieved from the Internet <URL:https://en.wikipedia.org/w/index.php?title=Perspective-n-Point&oldid=746412497> [retrieved on 20210311]

## Description

### FIELD

The present disclosure relates generally to augmented reality, and more specifically, and without limitation, to mapping coordinate systems of multiple devices.

### BACKGROUND

Augmented reality presentations can project virtual objects within a real-world environment displayed on a display of a device. A camera of an augmented-reality device can capture real-world environment. A virtual object may be created and presented by a display of the device such that the virtual object appears as if naturally positioned within the environment. For instance, a camera may capture live video of a real-world environment that includes empty picnic table. The augmented-reality device may generate a virtual object that is presented as if positioned on the picnic table. The virtual object is presented on a display device in substantially the same manner as the object would appear if physically located on the picnic table.

In multi-device augmented-reality systems, each device may present a virtual representation of the real world-environment. In particular, each device presents the virtual representation of the environment from that device's perspective. Thus, it can be important in such systems that the virtual environment is consistently presented across the devices.

WO2017027338A1 discloses a camera marker system. In an exemplary embodiment, a camera marker includes a display operative to display an augmented reality marker and a wide-angle camera on the same side of the camera marker as the display. A plurality of camera markers perform a self-calibration routine in which each camera marker determines relative locations of other camera markers in its field of view, and the camera markers cooperate to define a shared coordinate system. The location and orientation of an augmented reality viewer, such as a head-mounted display, can then be determined within the shared coordinate system using camera markers in a field of view of the augmented reality viewer.

EP3330926A1 discloses a method for determining a pose estimation of a camera in an environment including a display for moving pictures, comprising: obtaining reference frames corresponding in a synchronized way to at least part of at least some of multiple displayed frames displayed on said display; obtaining image data from images of said displayed frames captured with said camera by shooting said display; determining said pose estimation from correlating at time steps said image data and said reference frames. Corresponding device, and applications to augmented reality.

"Smart Phone Interaction with Registered Displays", PEARS N ET AL: XP011255509, describes the theory and practice of display registration with smart phones, findings in initial user studies, and opportunities for developing markerless display registration schemes.

US2016/343137 A1 discloses a method and system for determining a position of a camera. The method and system includes determining and registering geographical coordinates of a mobile device in the mobile device itself, presenting on a display of the mobile device a pattern representing the geographical coordinates of the mobile device, capturing by the camera an image of the display of the mobile device when presenting the geographical coordinates, translating in the camera the pattern in the captured image of the display of the mobile device into geographical coordinates, and determining in the camera the position of the camera based on the geographical coordinates translated from the pattern in the captured image.

"Perspective-n-Point - Wikipedia" discloses Perspective-n-Point which is the problem of estimating the pose of a calibrated camera given a set of n 3D points in the world and their corresponding 2D projections in the image.

### SUMMARY

The invention is set out in the appended set of claims.

### BRIEF DESCRIPTION OF THE DRAWINGS

The present disclosure is described in conjunction with the appended figures:
FIG. 1 is an illustration of an augmented-reality system in which the coordinate systems of multiple device can be mapped according to at least one aspect of the disclosure.
FIG. 2 illustrates examples of fiducial markers that may be presented on a first device for multi-device coordinate system mapping according to at least one aspect of the disclosure.
FIG. 3A illustrates a process for generating a pose of a device relative to a coordinate system of another device according to at least one aspect of the disclosure.
FIG. 3B illustrates a process for generating a coordinate-system transform according to at least one aspect of the disclosure.
FIG. 4 is a flowchart of a process for mapping the coordinate systems of two mobile devices according to at least one aspect of the disclosure.
FIG. 5 illustrates examples of components of a computing system that executes an augmented-reality application according to at least one aspect of the disclosure

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

The ensuing description provides preferred exemplary embodiment(s) only, and is not intended to limit the scope, applicability or configuration of the disclosure. Rather, the ensuing description of the preferred exemplary embodiment(s) will provide those skilled in the art with an enabling description for implementing a preferred exemplary embodiment. It is understood that various changes may be made in the function and arrangement of elements.

Augmented-reality applications execute on devices to present virtual objects within contemporaneously captured video of a real-world environment within which the devices are located. A device may present the captured video on a display of the device with a virtual object presented therein such that the virtual object appears properly in the real-world environment. For instance, the virtual object may be presented on the display in substantially the same position and orientation as how a corresponding real-world object would appear if the real-world object was physically positioned in the real-world environment. In order to maintain the coherence of the virtual object as the device moves, the device may track its position and orientation within the real-world environment to ensure the virtual object continues to appear properly despite changes in the device's perspective. The position and orientation define a pose of the device. The device may define a coordinate system to map the real-world environment to the virtual environment and track its pose with regarding to this coordinate system.

In multi-device augmented-reality applications, the same virtual object can be presented on each display of multiple devices located in a real-world environment. Typically, each device executes a tracking process, such a SLAM process, to track its pose (e.g., position and orientation) within the real-world environment according to its own coordinate system. Since the coordinate systems of the devices differ, transformation between the coordinate systems may be needed in order to display instances of the same virtual object on the devices in a coordinated and coherent manner. The transformation can be generated based on one or more of the devices displaying known fiducial markers or natural images and remaining devices capturing images of these fiducial markers or natural images.

In an example, during an AR calibration procedure, a first device may track its pose (T₁₁) relative to a first coordinate system of the first device. Similarly, a second device may track its pose (T₂₂) relative to a second coordinate system of the second device. As used herein, a pose (Tᵢⱼ) refers to the pose of device "i" in a coordinate system "j." The first device may present a fiducial marker or a marker image on a display of the first device and transmit its pose (T₁₁) (or a sequence of poses (T₁₁)) together with a timestamp (or a sequence of timestamps with each timestamp in the sequence corresponding to a pose of the sequence of poses) to the second device, Each pose may be tracked in the first coordinate system. The marker image may be any image that may have detectable features usable by a device to define a pose of the device relative to the detectable features.

The second device may capture a single or a sequence of images of the fiducial marker or the marker image displayed by the first device. A best image of the sequence of images and the pose (T₂₂) of the second device that matches the timestamp of the pose (T₁₁) may be selected. Based on the image, the second device detects feature points from the fiducial marker or the marker image. Once detected, the second device derives three-dimensional (3D) coordinates of the fiducial points from the pose of the first device (T₁₁), known information about the fiducial marker or marker image, and known information about the geometry of the first device to establish a correspondence between the 3D coordinates and the 2D feature points. By using a perspective-n-point technique based on the correspondence, the second device can derive its pose (T₂₁) in the first coordinate system. The two poses (T₂₁) and (T₂₂) of the second device relative in the first coordinate system and the second coordinate system, respectively, can be used to generate a coordinate-system transformation. The coordinate-system transformation can transform a position and orientation from the first coordinate system to the second coordinate system and vice versa.

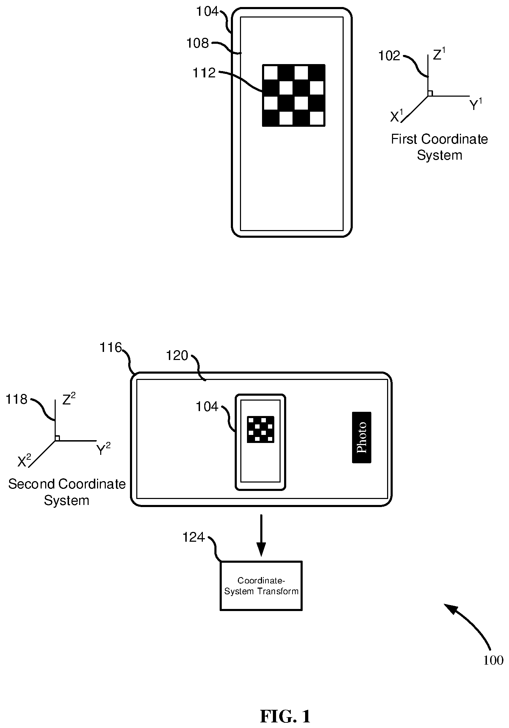

FIG. 1 is an illustration of an augmented-reality system 100 in which a transformation between coordinate systems of multiple device can be determined according to at least one aspect of the disclosure. Augmented-reality system 100 includes multiple devices, such as a first device 104 and a second device 116. The devices 104 and 116 are located in a real-world environment. Each of the devices 104 and 116 executes an AR application to display a virtual representation of the real-world environment, where the virtual environment includes virtual objects.

In an example, the first device 104 may present a virtual object on display 108 of the first device 104 as if the virtual object was a physical object positioned within the real-world environment. The presentation of the virtual object within the virtual environment is based on a first coordinate system 102 of the first device 104. A second device 116 may also present another instance of the virtual object on its display 120. Here also, this presentation depends on a second coordinate system 118 of the second device 116. For the instances of the virtual object to be presented in a coordinated and coherent manner of displays 108 and 120, a transformation 124 between the first coordinate system and the second coordinate system is needed.

During a calibration of the augmented-reality applications executing on the first device 104 the second device 116, the second coordinate system 118 of the second device 116 can be mapped to the first coordinate system 102 of the first device 104 without using a fixed reference point in the environment. Instead, and as further described herein below, the first device 104 presents a reference to the second device 116 and the second device 116 generates and processes an image of this reference to define the transformation between the two coordinate systems. Other operations are performed during the calibration. For instance, the first device 104 may execute a process to track its pose relative to the first coordinate system 102. Similarly, the second device 116 may also track its pose relative to the second coordinate system 118. After the calibration, each device may begin presenting virtual objects in a coordinated and coherent manner based on the transformation between the coordinate systems and on tracked poses.

For instance, during the calibration, it can be determined that a current position of the first device 104 is at the origin of its own coordinate system 102. The first device 104 may track its own movement using internal sensors (e.g., accelerometers, global positioning system (GPS) sensors, compass, combinations thereof, or the like), image processing (e.g., using machine-learning, deep learning, or the like), or a combination thereof and update its position within coordinate system 102. The first device 104 may not know the environment within which it is positioned, but it may track its position relative to where the first device 104 was initially calibrated (e.g., its origin). For instance, if the internal sensor indicate that the first device 104 has moved a meter after the calibration, the position of the first device 104 may be determined as being a meter (in a particular direction) from the origin. Thus, the coordinate system 102 of the first device 104 may be used to indicate a relative location of the first device 104 (e.g., relative to the location of the first device 104 at the calibration time), but not necessarily the absolute location of the first device 104 since the environment may be unknown.

In some instances, the first device 104 may execute a simultaneous localizations and mapping (SLAM) process that may define the coordinate system 102 and track the pose of the devices within its environment. SLAM processes may be used to track the first device 104 within a real-world environment even when the real-world environment is unknown (at least initially) to the SLAM process. SLAM processes may take as input variables such as, but are not limited to, control data ct, sensor data st, and time intervals t and generate an output that may include an approximate location of the device xt for at a given time interval and a map of the environment mt.

A SLAM process may initiate with a calibration step in which coordinate system 102 may be initialized representing the real-world environment with the first device 104 positioned at the origin. As the first device 104 captures sensor data that indicates movement in a particular direction (and optionally image data from a camera of the first device 104 that may be used to indicate objects within the environment), the SLAM process may update xt and mt. SLAM may be an iterative process that updates xt and mt in set time intervals or when new sensor data or image data can be detected. For instance, if no sensor change occurs between time interval t and t+1, then the SLAM process may delay updating the position and map to preserve processing resources. Upon detecting a change in sensor data indicating a high probability that the device has moved from its previous position xt, the SLAM process may compute the new position of device xt and update the map mt. The same processes may be performed by the second device 116 to define the coordinate system of the second device 116 and the position and orientation n of the second device 116 relative to a coordinate system 118.

Once the initial poses of the first device 104 and the second device 116 are detected, the first device 104 may present a fiducial marker 112 (or some other type of a reference) on display 108 of the first device 104. Fiducial marker 112 may be predetermined such that the size, shape, color, pattern, shading, etc. may be known to the devices of multi-device augmented-reality system 100. For instance, fiducial marker 112 may be a checkerboard pattern of black and white squares of known size. Upon displaying fiducial marker 112, the first device 104 may transmit its pose defined in the first coordinate system 102, instructions for capturing an image of fiducial marker 112, and, optionally, information about the geometry of the first device 104 (e.g., size of the screen), and a fiducial marker identifier that indicates the particular fiducial marker presented by the first device 104 to the second device 116. In some instances, the first device 104 may transmit a sequence of poses with each pose of the sequence of poses including a first timestamp corresponding to an instant in time in which the pose was determined.

The second device 116 may be directed to capture an image of the fiducial marker being displayed by the first device 104. If more than one pose was received from the first device, the second device may select the pose from the sequence of poses with a first timestamp that is closest to a second timestamp corresponding to an instant in which the image was captured. In some instances, the second device 116 may capture a sequence of images to ensure that at least one image of the sequence of images captured particular features of the fiducial marker needed to define a coordinate-system transform. Each image may include a second timestamp indicating an instant in which the image was captured. The second device may select the best image from the sequence of images. If more than one pose was received from the first device, the second device may select the pose from the sequence of poses with the first timestamp that is closest to the second timestamp of the best image.

In some instances, the second device 116 may use two (or more) poses received from the first device 104. For instance, the second device 116 identify two or more poses that were determined (based on their respective timestamps) closest in time to the instant that the best image was captured. The second device may then interpolate between the two poses received from the first device 104 using the corresponding timestamps of the poses to generate a new pose of the first device 104 that corresponds to the pose of the first device at the instant in which the best image was captured by the second device 116.

In some instances, the second device 116 may pre-store device geometry information of the first device 104 and/or possible fiducial markers that the first device 104 may present. For example, the second device 116 may load the device geometry information and the known characteristics of the fiducial marker from local memory. If more than one type of device may be used in the AR application, the second device 116 may receive an identifier, such as a device model identifier, to determine the proper device geometry information. The device geometry information may be received from local memory or from a server. If the first device 104 does not transmit a fiducial marker identifier, the second device 116 may identify the fiducial marker using a classifier in conjunction with one or more image processing techniques, such as edge detection.

Since the size, color, pattern, etc. of the fiducial marker are known, the image of fiducial marker 112 can be processed to define a set of two-dimensional (2D) feature points. Each 2D feature point may correspond to a point within fiducial marker 112 such as the center of a square, a vertex between squares, a corner of the fiducial marker, or any other point of the fiducial marker that can be readily identified based on a characteristic of the fiducial marker. The set of 2D feature points may be processed along with the pose of the first device 104 within the environment relative to the coordinate system 102 of the first device 104 and the known geometry information of the first device to identify 3D coordinates of each feature point. A correspondence between the set of 2D feature points and each 3D coordinates can be used to compute a pose of the second device 116 relative to the coordinate system 102 of the first device 104. The pose can be used to generate a coordinate-system transform that can map feature points of the coordinate system 102 of the first device 104 and the second coordinate system 118 of the second device 116.

Mapping the second coordinate system to the first coordinate system may be performed during the calibration. In some instance, the mapping process may be performed again after the calibration such as when the SLAM process resets (as this will initiate a new coordinate system for that device), after a calibration value indicates that the mapping is no long accurate, or upon a predetermined time interval lapsing.

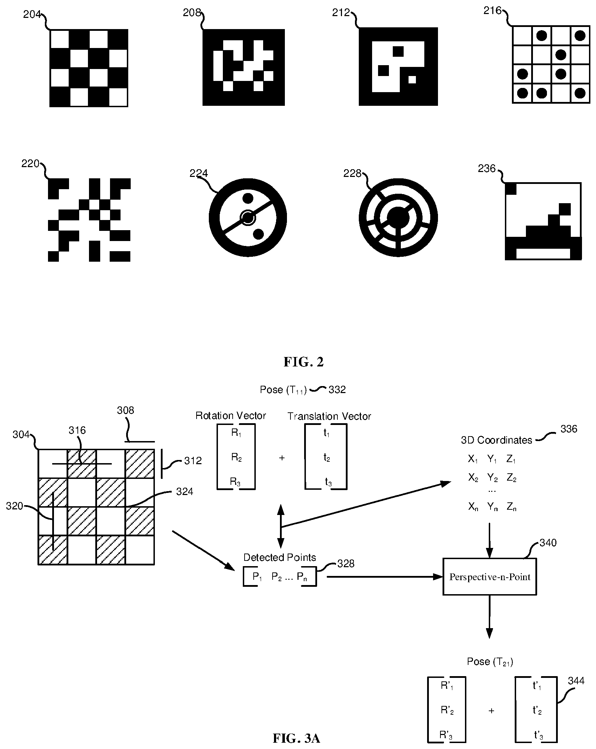

FIG. 2 illustrates examples of fiducial markers that may be presented on a first device for multi-device coordinate system mapping according to at least one aspect of the disclosure. Markers 204-236 may be fiducial markers that may be used to map coordinates of a first coordinate system to corresponding coordinates of a second coordinate system. Fiducial markers 204-236 may include a predefined size, shape, and pattern that can be known to a device that captures an image of the fiducial marker. Since the characteristics of the fiducial marker are known, image processing (for example) may be used to detect the fiducial marker (once captured by a camera of the device). Characteristics of the fiducial marker captured in an image can be used to, for example, define a location of the device relative to the fiducial marker, determine the scale of objects within the real-world environment, determine an orientation of the device, map the coordinate system of the device to another device, and the like.

For instance, characteristics of each fiducial marker may be selected to enable detection of the fiducial marker and its feature points regardless of the particular rotation or transformation of the maker within the captured image. For instance, a fiducial marker may include one or more shapes within the fiducial marker that appear differently when rotated or transformed so as to indicate a degree of rotation and/or transformation upon detection. The degree of rotation/transformation may be used to determine the orientation of the device that captured the image. For instance, if the fiducial marker in the image is rotated 45 degrees, then it can be determined that the device is also rotated by 45 degrees.

In some instances, one or more rotations, affine transformations, Euclidean transformations, reflections, transpositions, combinations thereof may be performed on the image of the fiducial marker and output a processed fiducial marker that appears in a predetermined orientation. For instance, the device capturing the fiducial marker may store characteristics of the fiducial marker (e.g., size, pattern, colors, etc.). Yet, the fiducial marker may not appear as expected (e.g., rotated, blurry, stretched, etc.). The image may be processed to isolate the fiducial marker and rotate and/or transform the fiducial marker such that fiducial marker appears in an expected orientation. In other instances, the image of the fiducial marker may not be processed to change the orientation of the fiducial marker within the image.

Devices detect the orientation of the fiducial marker by detecting one or more feature points of the fiducial marker. Feature points may be detected using the detected characteristics of the fiducial marker and the known characteristics of the fiducial marker. For instance, feature points may be based on particular characteristics of the maker. For instance, fiducial marker 204 can be a checkerboard pattern. Feature points may be detected at the vertices between each set of four squares, at the center of each white square or black square, at the corners, at the corners of each white square, at the corners of each black square, combinations thereof, or the like. Each fiducial marker may include one or more feature points that can be detected within an image. In some instance, each fiducial marker may include three or more feature points. While any number of feature points may be detected, the more feature points that can be detected the greater the accuracy in mapping the coordinate systems.

Devices may use image processing to detect the fiducial marker from other portions of the image as well as to detect feature points from the fiducial marker. One such image processing technique includes edge detection. Edge detection may include a filtering technique in which one or more filters can be applied to the image. Filters may modify the image by, blurring, sharpening, transforming (such as, but not limited to one or more affine transformations, Euclidian transformations, or the like), and/or the like. Filters may reduce image noise by, for example, removing image artifacts and/or other portions of the image that does not correspond to the fiducial marker.

In some instances, an image may have some portions that may be processed more than other portions of the image. For instance, a portion of the image to appear blurry and another portion of the image may be clear. Different filters may be applied to different portions of the image, and in addition, a different set of filters may be applied to different portions of the image. Different filters may be applied to different portions of the image. For example, a first portion of the image may be filtered to sharpen the first portion and a second portion of the image may be filtered with an affine transformation filter and noise reduction. Any number of different filters may be applied to the image and/or each patch.

Once the filters are applied, edge detection may identify variations in pixel intensity gradients across adjacent pixels. Large variations in the intensity between adjacent pixels can be indicative of the presence of an edge. For example, a first pixel with a high intensity value next to pixels with a low intensity values can provide an indication that the first pixel is part of an edge. In some instances, pixels that are not part of edges may be suppressed (e.g., set to a predetermined red/green/blue value, such as black, where red = 0, blue = 0, and green = 0, or any predetermined red/green/blue value). An edge detection operator such a Roberts cross operator, a Prewitt operator, a Sobel operator, and/or the like may be used as part of the identification of the pixel intensity gradients.

A non-maximum suppression process may be used to suppress pixels that do not correspond strongly to an edge. The non-maximum suppression process assigns an edge strength value to each pixel identified using the pixel intensity gradient as being part of an edge. For each pixel identified as being part of an edge, the pixel's edge strength value can be compared to the edge strength value of the pixel's s eight surrounding pixels. If the pixel has a higher edge strength value than the edge strength value of the surrounding pixels (e.g., local maxima), then the surrounding pixels are suppressed. Non-maximum suppression may be repeated for each pixel in the entire image.

A double threshold process may then be executed to remove noise and/or spurious edge pixels that carried through application of previous image processing techniques applied herein. Two thresholds of pixel intensities may be defined, one high and one low. The thresholds may be used to assign an intensity property to each pixel as being strong or weak. Pixels that include an intensity value higher than the high threshold can be assigned a strong intensity property, where pixels that include an intensity value that is between the high threshold and the low threshold can be assigned a weak intensity property. Pixels that include an intensity value below the low threshold may be suppressed (e.g., in the same manner as described above).

A hysteresis process may then be executed to remove pixels with a weak intensity property (that is weak due to noise, color variation, etc.). For example, a local statistical analysis (e.g., a connected-component analysis, etc.) may be performed for each pixel with a weak intensity property. Pixels with a weak intensity property that are not surrounded by a pixel that includes a strong intensity property may be suppressed. The remaining pixels (e.g., the un-suppressed pixels) after the hysteresis process include only those pixels that are part of edges. Although the above five processing processes were described in a particular order, each process may be executed any number of times (e.g., repeated), and/or executed in any order. In some instances, only a subset of the five processes need be performed on the image. For example, image processing may perform identification of the pixel intensity gradients process without first performing a filtering process. In some instances, images may be received partially processed (e.g., one or more of the processes above having already been performed). In those instances, one or more additional processes may be performed to complete the image processing.

In some instances, signal processing may be performed on the image (e.g., similar to a radio frequency signal). The image may be transformed into a frequency domain (e.g., using a Fourier transform or the like) to represent the frequency in which a particular pixel characteristic exists in the image (e.g., pixel intensities, RGB values, and/or the like). In the frequency domain, one or more filters (such as, but not limited to, Butterworth filters, band pass, and/or the like) may be applied to the image (e.g., during preprocessing, edge detection, or after) to suppress or alter particular frequencies. Suppressing particular frequencies can reduce noise, eliminate image artifacts, suppress non-edge pixels, eliminate pixels of particular colors or color gradients, normalize color gradients, and/or the like. A high-pass filter may reveal edges in an image (e.g., sharp contrasts of color and/or intensity between adjacent pixels) while a low-pass filer may blend edges (e.g., blur). Image padding may be performed prior to signal processing to improve the signal processing techniques. In some instances, different portions and/or patches of the image may be processed differently with some being processed with a high-pass filter and others with a low-pass filter. In some instances, the thresholds (e.g., the cutoff frequency for the high or low-pass filters) may be modified for different portions of the image (e.g., based on image processing one or more previous images, machine-learning, and/or the like).

Signal processing may also determine other properties of the image such as coherence (e.g., used in edge detection, segmentation, pattern analysis, etc.), which identifies the relation between pixels. The relation between pixels can be used to further refine edge detection and/or to identify the structural properties of what is depicted within the image. For example, coherence can be used to identify portions of the image that are related (e.g., portions of a same object) from parts of the image that are not.

Markers 204-236 are examples of fiducial markers that can be used to map the coordinate systems of two or more devices. For instance, fiducial marker 204 may be a checkerboard pattern with alternating squares of two or more colors. In some instances, the colors may have a high degree of contrast such as white and black. In other instance, one or more colors other than black and white may be used such as red, green, and/or blue (or alternatively cyan, magenta, and/or yellow). In still yet other instances, contrasting pattern fill may be used in which one set of squares may not include a pattern, and another set of squares may use cross-hatching. Marker 204 may or may not include a border that surrounds the fiducial marker as edge detection may be used to define the borders of the fiducial marker.

Markers can have irregular shapes and may not conform to set patterns. For instance, fiducial markers 208, 212, 220, and 236 include a set of black squares dispersed a predefined area. The square shape of the fiducial marker may be used, in part, to determine the particular contours of the fiducial marker. In addition, the dispersal pattern of the set of squares (e.g., the distance between two or more particular squares, etc.), may be used to indicate the position of the device that captured the image. For instance, the distance between two non-adjacent squares may be known to the device. The device may calculate the difference between the known distance and the distance detected in a captured image. The larger the difference between the known value and the distance calculated from the image, the further away the camera may be from the fiducial marker.

Similarly, the size of particular sets of squares may be calculated and compared to known sizes. Variations in sizes of the squares can be used to determine the orientation of the device relative to the fiducial marker. For instance, one side of squares is larger than the squares of the other sides, the camera of the device may have captured the image of the fiducial marker from an angle offset and not perpendicular from the fiducial marker.

In some instances, a fiducial marker may have a non-square shape such as fiducial markers 224 and 228. Markers 224 and 228 may have a circular shape with internal circular shapes. In some instances, one or more additional shapes may be included within those fiducial markers such as the lines that bisect the circles. These additional shapes may indicate an orientation of the fiducial marker so as to indicate the orientation of the device.

Although particular shapes are shown in FIG. 2 having a particular pattern, shape, color, orientation, and/or the like fiducial markers may have any particular shape that may be geometric such the squares and circles shown, or amorphous.

FIG. 3A illustrates an example of generating a pose of a device relative to a coordinate system of another device according to at least one aspect of the disclosure. A second device may capture an image of a first device that is presenting fiducial marker 304. One or more feature points of fiducial marker 304 may be detected. Feature points can be any visually distinctive point of a fiducial marker. In some instances, detecting feature points within a fiducial marker may include detecting the size of individual components of the fiducial marker such as size 308 and 312. In addition, the distances between non-adjacent shapes such as 316 and 320 may be detected to determine the orientation of the camera that captured the image. In other instances, the size of individual shapes or the distances between non-abject shapes may be determined using the feature points detected within the fiducial marker. The feature points may be detected based on particular characteristics of fiducial marker 304. For instance, fiducial marker 304 may include feature points at each vertex 324 formed by two adjacent shapes that share a common color. Marker 304 may include nine feature points. Other fiducial markers may include more or less feature points. The feature points may be aggregated into a set of feature points 328.

A pose (T₁₁) 332 of the first device at the instant in which the image of maker was captured may be received by the second device. A pose may represent a position and an orientation of the first device relative to the coordinate system of the first device. In some instances, pose 332 may be represented by a rotation vector R[R₁, R₂, R₃] and a translation vector t[t₁, t₁, t₁]. In other instances, pose 332 may be represented as a transformation matrix. Pose (T₁₁) may be determined using a SLAM process executing on the first device, image processing of images captured by the first device, device geometry information such as the dimensions of the device, camera information (e.g., scaled focal lengths, skew parameter, principle point, scale factors, or the like), internal sensors (e.g., accelerometers, gyroscopes, compasses, or the like), combinations thereof, or the like.

The pose (T₁₁) of the first device and the set of feature points may be used to identify data indicative of three-dimensional coordinates 336 of each feature point of the set of feature points relative to the coordinate system of the first device. For instance, each feature point may represent a 2D coordinate associated with the fiducial marker displayed on the first device. The pose of the first device represents the first device's position and orientation. The combination of device geometry information and the position and orientation of the first device can be used to generate a 3D coordinate (in the first coordinate system) for each feature point.

A correspondence between the feature points and the three-dimensional coordinates of the feature points may be established. The second device may execute a perspective-n-point process using the correspondence between the three-dimensional coordinates and the set of feature points to generate the current pose of the second device relative to the coordinate system of the first device. For instance, the set of feature points may be used to determine the position and orientation of the second device relative to the set of feature points. Since the correspondence links the three-dimensional coordinates (that are based on the coordinate system of the first device) and the set of feature points, the second device may identify its position and orientation, or pose 344 (T₂₁), relative to the coordinate system of the first device.

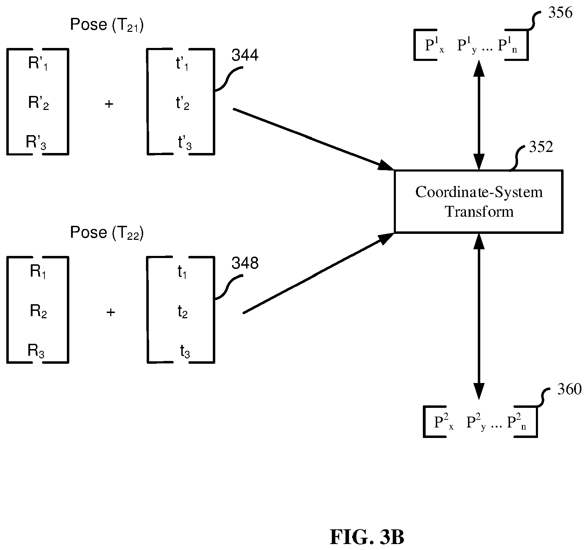

FIG. 3B illustrates a process for generating a coordinate-system transform according to at least one aspect of the disclosure. The pose (T₂₁) 344 of the second device relative to the coordinate system of the first device may be used along with the pose (T₂₂) of the second device relative to the coordinate system of the second device to generate a coordinate-system transform 352. Coordinate-system transform may be used to map points (e.g., coordinates) of the second coordinate system to corresponding coordinates in the first coordinate system and vice versa.

For instance, a set of points 360 may be points within the second coordinate system that correspond to a virtual object. The virtual object may be presented within a display of a first device by converting the set of points 360 to the corresponding set of points 356 of the first coordinate system. Coordinate-system transform may convert points from the second coordinate system into corresponding points in the first coordinate system and/or convert points from the first coordinate system into corresponding points in the second coordinate system. Thus, the coordinate-system transform can be used to present virtual objects defined according to one coordinate system in substantially the same position and orientation in the other coordinate system.

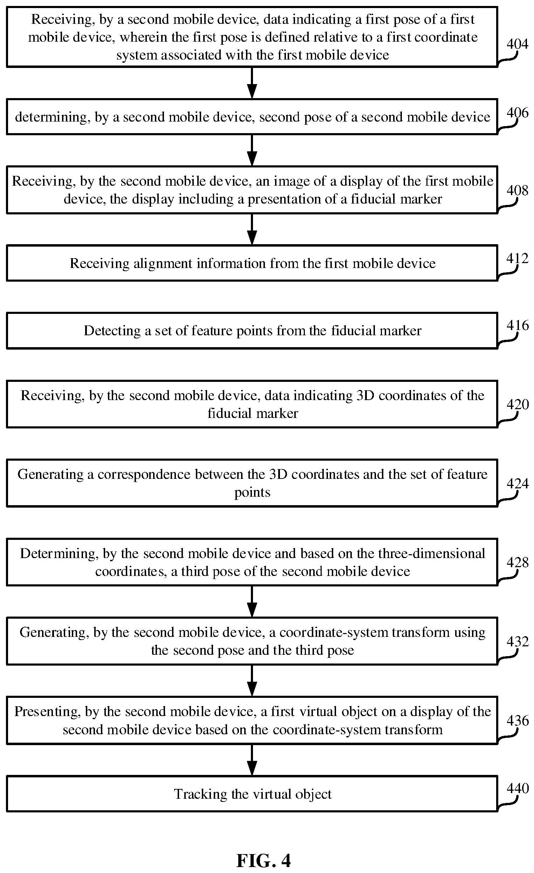

FIG. 4 is a flowchart of a process for mapping the coordinate systems of two mobile devices according to at least one aspect of the disclosure. At block 404, a first pose (T₁₁) of a first mobile device may be received. The first mobile device may execute a position tracking process, such as a SLAM process, that tracks the pose (T₁₁) of the first mobile device associated with the coordinate system of the first mobile device. The first pose, (T₁₁), received at block 404 may be a particular pose at a particular instant in time. The first pose may be associated with a first timestamp corresponding to an instant in which the first pose was determined. In some instances, a sequence of poses may be received with each pose of the sequence of poses being associated with a corresponding first timestamp.

At block 406, a second pose (T₂₂) may be determined by the second device. The second pose (T₂₂) may be defined relative to the coordinate system associated with the second mobile device. The second pose may be determined using a position tracking process, such as a SLAM process.

At block 408, an image of a fiducial marker presented on a display of the first mobile device may be received by the second mobile device. The image of the fiducial marker may be associated with a second timestamp indicating an instant in which the image was captured. In some instances, a sequence of images of the fiducial marker may be captured with each image being associated with a corresponding second timestamp. For example, the second mobile device may receive instructions (e.g., from a server or the first mobile device) for using a camera of the second mobile device to take a picture of the display of the first mobile device while the first mobile device is presenting the fiducial marker. The instructions may be presented on a display of the second mobile device. In another example, the image(s) may be received by the second mobile device via a network connection or the like. The fiducial marker may be any marker of predetermined size and geometry.

Though a fiducial marker is described, any type of markers can be used. Generally, an image is generated by a mobile device, while the mobile is in operation (e.g., during an AR session). The image shows elements within the real world environment. These elements can be used as markers in the example flow of FIG. 4 and the embodiments of the present disclosure. One example of the elements is the fiducial markers. Other examples of elements include a landmark such as unique architecture or a portion thereof within the real-world environment, an identifiable feature of the real world environment, a graphic within the real world environment, a graphic overlaid on the image, and the like.

At block 412, alignment information may be received by the second mobile device. The alignment information may be transmitted to the second mobile device from the first mobile device or form a server. The alignment information can include the pose (or the sequence of poses) of the first mobile device, an identification of the fiducial marker displayed by the first mobile device, device geometry information of the first device, a device model identifier of the first device, and/or the like. In some instance, some of the alignment information may be received from the first mobile device and some of the alignment information may be received from a server. For instance, the device model identifier of the first mobile device may be used to look up the device geometry information from the memory of the second mobile device or form the server. It may not be necessary to obtain the device geometry information if the device model identifier of the first device matches the device model identifier of the second mobile device. In other instances, all of the alignment information may be received from the first mobile device. The second mobile device may receive the alignment information at substantially the same time as the image of the fiducial marker is obtained at block 410, shortly beforehand, or shortly afterwards.

A block 416, a set of feature points can be detected from the image of the fiducial marker. If a sequence of images were captured, the best image from the sequence of images may be selected and the set of feature points may be detected using the best image. The best image may be the image that captured a view of the entire fiducial marker, which has the highest number of visible feature points, the clearest image, the image with the fewest image artifacts or defects, or the like. Since the fiducial marker has a known size and geometry, the feature points can be used to determine a pose of the second mobile device relative to the fiducial marker. In some instances, the set of feature points includes three feature points. In other instances, the set of feature points includes four or more feature points.

At block 420, data indicative of three-dimensional coordinates may be defined. The three-dimensional coordinates may be defined using the first pose, mobile device geometry information, and the set of feature points. If the second device received a sequence of poses, the second mobile device may select a particular pose from the sequence of poses as the first pose. The particular pose may be the pose that has a first timestamp that is closest to the second timestamp of the captured image (or selected best image if more than one images was captured). For instance, if the sequence of poses p1, p2, and p3 are associated with first timestamps t1, t2, and t3 (respectively) and the captured image is associated with second timestamp t2.1, then pose p2 will be selected as the first pose as p2 is associated with first timestamp t2 which is closest to the second timestamp t2.1 of the captured image. In some instances, if a timestamp of a pose does not approximately equal a corresponding timestamp of an image, the second device may interpolate between two poses of the first device using the corresponding timestamps of each pose to compute the pose of the first device at the exact instant when the best image was captured by the second device. For example, poses p2 and p3 can be interpolated to compute the pose of the first device at timestamp t2.1 of the captured image. The known size and geometry of the fiducial marker may be exploited by using the mobile device geometry to estimate a physical position of each feature point displayed on the display of the first mobile device. The pose of the first mobile device can be used to determine a three-dimensional coordinate of each feature point in the first coordinate system.

At block 424, a correspondence between the three-dimensional coordinates and the set of feature points can be generated. The correspondence may represent a mapping that links the three-dimensional coordinates (associated with the first coordinate system) and the feature points of the image of the fiducial marker.

At block 428, a third pose (T₂₁) of the second mobile device relative to the first coordinate system may be defined using the correspondence between the three-dimensional coordinates and the set of feature points. For instance, a perspective-n-point process may use the correspondence as input (along with camera calibration data such as scaled focal lengths, skew parameter, principal point, scale factor, and/or the like) to generate an estimated third pose of the second mobile device. The third pose of the second mobile device may be associated with the coordinate system of the first mobile device.

At block 432, a coordinate-system transform may be generated using the second pose (T₂₂) of the second mobile device relative to the a coordinate system associated with the second mobile device and the third pose (T₂₁) of the second mobile device relative to the coordinate system the first mobile device.. The coordinate-system transform may map points in the first coordinate system of the first mobile device to corresponding points in the second coordinate system of the second mobile device. In some instances, the positions computed by the SLAM process of the first mobile device may be transformed into the positions in the second coordinate system of the second mobile device. In other instances, the positions computed by the SLAM process of the second mobile device may be transformed into the positions in the first coordinate system of the first mobile device.

At block 436, an instance of a virtual object may be presented on a display of the second mobile device based on the coordinate-system transform in a natural and coherent manner with respect to the display of a second instance of the virtual object presented on a display of the first mobile device. For instance, the second mobile device may receive data associated with the virtual object from the first mobile device such as, for example, the 3D coordinates of the virtual object in the first coordinate system. The second mobile device may use the coordinate-system transform to convert the 3D coordinates of the virtual object associated with the first coordinate system into to 3D coordinates in the second coordinate system. The second mobile device may present the instance of the virtual object using the 3D coordinates of the virtual object in the second coordinate system.

For instance, in an augmented-reality application, the second mobile device may capture images or video of an environment. The second mobile device may define an instance of virtual object that is to be presented on a display of the second mobile device as if physically located within the environment. The SLAM process may track the second mobile device as it moves within the environment such that the virtual object continues to appears as if physically (and naturally) located within the environment (regardless of the second mobile device's change in position or orientation).

The first mobile device then may cause a second virtual object (e.g., an instance of the virtual object) to be presented within the display of the first mobile device at approximately the same position and orientation within the virtual environment as the virtual object. For instance, the first device may capture images/video of the environment and present the second virtual object within the captured images/video such that the second virtual object appears as if physically (and naturally) located within the environment (regardless of the second mobile device's change in position or orientation).

At block 440, the first coordinate system may be synchronized with the second coordinate system by continuously tracking the first mobile device and the second mobile device (e.g., using respective SLAM process executing the respective mobile devices) according to the mapped coordinate system.

The process of FIG. 4 may be executed entirely by the first mobile device, partially by the first mobile device, entirely by the second mobile device, partially by the second mobile device, entirely by a server, or partially by the server. The server may direct the mapping of the coordinate systems of the first mobile device and the second mobile device and execute all or part of the augmented- reality application. For example, the first mobile device may define the first pose (using a SLAM process executed by the first mobile device) and the second mobile device may define the second pose (using a SLAM process executed by the second mobile device). The second mobile device may be directed to obtain an image of the fiducial marker presented on the display of the first mobile device. The second mobile device may detect the set of feature points. In some instances, the first pose may be transmitted to the second mobile device and the second mobile device may identify the three-dimensional coordinates. In other instances, the set of feature points maybe transmitted to the first mobile device and the first mobile device may identify the three-dimensional coordinates. In still yet other instances, the set of feature points set of feature points may be transmitted to a server. The server may identify the three-dimensional coordinates.

Continuing the example, the second pose may be defined by the second mobile device or by a server that transmits the defined second pose back to the second mobile device. The second mobile device may use the second pose to generate the coordinate-system transform to map positions of the second coordinate system to positions of the first coordinate system. In some instances, the first mobile device may use the second pose to generate the coordinate-system transform to map positions of the first coordinate system to positions of the second coordinate system. The coordinate-system transform may be used with the SLAM process executing on the second mobile device to track virtual objects within an environment that are defined according the coordinate system of the first device.

The blocks of FIG. 4, though presented in a particular order, may be executed in any particular order. In some instances, each block of FIG. 4 may be executed one or more times before moving on the next block. Although FIG. 4 describes mapping the coordinate systems of two devices, the process of FIG. 4 may be extended to mapping the coordinate systems of any number of devices by for example, having each additional device execute the processes of 404-432. For instance, each additional device may use the first device as a reference object or any other device with a coordinate system that has been previously mapped with the coordinate system of the first device.

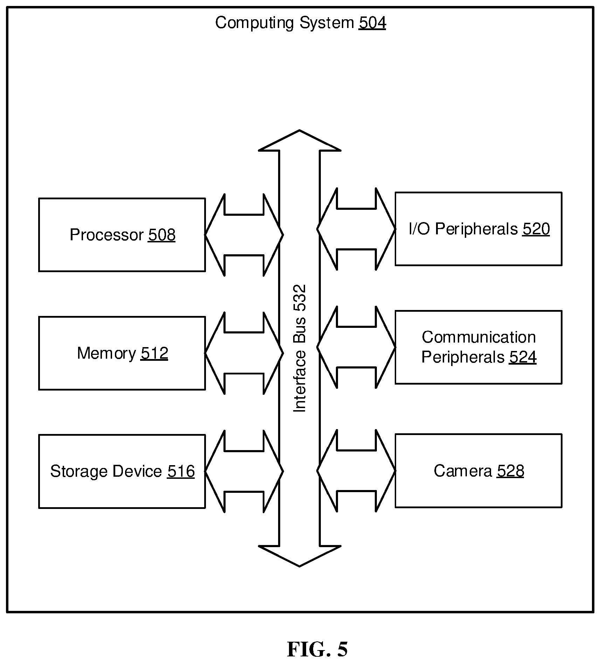

FIG. 5 illustrates examples of components of a computing system that executes an augmented-reality application according to at least one aspect of the disclosure. Computing system 504 can be an example of a mobile device described in connection FIG. 4. Although these components are illustrated as being part of computing system 504, computing system 504 can also be distributed such that some components may be positioned within a different hardware platform than other components.

Computing system 504 includes at least a processor 508, a memory 512, a storage device 516, input/output peripherals (I/O) 520, communication peripherals 524, one or more cameras 528, and an interface bus 532. Interface bus 532 can be configured to communicate, transmit, and transfer data, controls, and commands among the various components of computing system 504. Memory 512 and storage device 516 can include computer-readable storage media, such as RAM, ROM, electrically erasable programmable read-only memory (EEPROM), hard drives, CD-ROMs, optical storage devices, magnetic storage devices, electronic non-volatile computer storage, for example Flash^{®} memory, and other tangible storage media. Any of such computer readable storage media can be configured to store instructions or program codes embodying aspects of the disclosure. Memory 512 and storage device 516 may also include computer readable signal media. A computer readable signal medium includes a propagated data signal with computer readable program code embodied therein. Such a propagated signal takes any of a variety of forms including, but not limited to, electromagnetic, optical, or any combination thereof. A computer readable signal medium includes any computer readable medium that is not a computer readable storage medium and that can communicate, propagate, or transport a program for use in connection with the computing system 504.

Further, memory 512 can includes an operating system, programs, and applications. Processor 508 may be configured to execute the stored instructions and includes, for example, a logical processing unit, a microprocessor, a digital signal processor, and other processors. Memory 512 and/or processor 508 can be virtualized and can be hosted within another computing system of, for example, a cloud network or a data center. I/O peripherals 520 can include user interfaces, such as a keyboard, screen (e.g., a touch screen), microphone, speaker, other input/output devices, and computing components, such as graphical processing units, serial ports, parallel ports, universal serial buses, and other input/output peripherals. I/O peripherals 520 are connected to processor 508 through any of the ports coupled to interface bus 532. Communication peripherals 524 may be configured to facilitate communication between computing system 504 and other computing devices over a communications network and include, for example, a network interface controller, modem, wireless and wired interface cards, antenna, and other communication peripherals.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations, and/or additions to the present subject matter as would be readily apparent to one of ordinary skill in the art. Indeed, the methods and systems described herein may be embodied in a variety of other forms; furthermore, various omissions, substitutions and changes in the form of the methods and systems described herein may be made.

Unless specifically stated otherwise, it is appreciated that throughout this specification discussions utilizing terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provide a result conditioned on one or more inputs. Suitable computing devices include multipurpose microprocessor-based computer systems accessing stored software that programs or configures the computing system from a general-purpose computing apparatus to a specialized computing apparatus implementing one or more embodiments of the present subject matter. Any suitable programming, scripting, or other type of language or combinations of languages may be used to implement the teachings contained herein in software to be used in programming or configuring a computing device.

Embodiments of the methods disclosed herein may be performed in the operation of such computing devices. The order of the blocks presented in the examples above can be varied-for example, blocks can be combined, and/or broken into sub-blocks. Certain blocks or processes can be performed in parallel.

Conditional language used herein, such as, among others, "can," "could," "might," "may," "e.g.," and the like, unless specifically stated otherwise, or otherwise understood within the context as used, is generally intended to convey that certain examples include, while other examples do not include, certain features, elements, and/or steps. Thus, such conditional language is not generally intended to imply that features, elements and/or steps are in any way required for one or more examples or that one or more examples necessarily include logic for deciding, with or without author input or prompting, whether these features, elements and/or steps are included or are to be performed in any particular example.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Similarly, the use of "based at least in part on" is meant to be open and inclusive, in that a process, step, calculation, or other action "based at least in part on" one or more recited conditions or values may, in practice, be based on additional conditions or values beyond those recited. Headings, lists, and numbering included herein are for ease of explanation only and are not meant to be limiting.

While the principles of the disclosure have been described above in connection with specific apparatuses and methods, it is to be clearly understood that this description is made only by way of example and not as limitation on the scope of the disclosure.

## Claims

1. A method of associating device coordinate systems for a multi-person augmented-reality system, the method comprising:
receiving (404), by a second mobile device (116), data indicative of a first pose (332) of a first mobile device (104), wherein the first pose (332) is defined relative to a first coordinate system (102) associated with the first mobile device (104);
determining (406), by the second mobile device (116), a second pose of the second mobile device (116), wherein the second pose is defined relative to a second coordinate system (118) associated with the second mobile device (116);
receiving (408), by the second mobile device (116), an image of a display (108) of the first mobile device (104), the image showing a marker (304);
identifying, by the second mobile device (116), based on the first pose (332) and the image, three-dimensional coordinates (336) associated with the marker (304), the three-dimensional coordinates (336) defined relative to the first coordinate system (102);
determining (428), based on the three-dimensional coordinates (336), a third pose (344) of the second mobile device (116), wherein the third pose (344) is defined relative to the first coordinate system (102) associated with the first mobile device (104); and
generating (432), by the second mobile device (116) based on the second pose and the third pose (344), a coordinate-system transform (124) that maps coordinates between the first coordinate system (102) and the second coordinate system (118);
wherein the data indicative of the first pose (332) of the first mobile device (104) comprises data of a sequence of poses, wherein each pose of the sequence of poses comprises a first timestamp corresponding to an instant in time in which the pose was determined.

2. The method of claim 1, wherein determining the third pose (344) of the second mobile device (116) comprises:
identifying a set of feature points from the marker (304); and
generating (424) a correspondence between the set of feature points and the three-dimensional coordinates (336) associated with the marker (304).

3. The method of claim 2, wherein identifying the set of feature points from the marker (304) comprises:
identifying the set of feature points from the marker (304) using image processing, wherein the image processing comprises at least one of edge detection, a non-maximum suppression process, a double threshold process, a hysteresis process, or signal processing.

4. The method of claim 2 or 3, wherein the set of feature points comprises three or more feature points.

5. The method of any of claims 1-4, wherein the first pose (332) is represented by a rotation vector and a translation vector, and wherein the three-dimensional coordinates (336) associated with the marker (304) are defined, at least in part, using the first pose (332) and information about a geometry of the first mobile device (104).

6. The method of claim 5, wherein the information about the geometry of the first mobile device (104) is pre-stored in the second mobile device (116) or received from a server by the second mobile device (116).

7. The method of any of claims 1-6, wherein a first virtual object presented by the second mobile device (116) corresponds to a second virtual object presented by the first mobile device (104), and wherein the first virtual object appears in substantially the same position and substantially the same orientation within an environment as the second virtual object.

8. The method of any of claims 1-7, wherein the coordinate-system transform (124) comprises a transformation matrix defined from a rotation and a translation between the second pose and the third pose (344).

9. The method of any of claims 1-8, wherein the first pose (332) comprises a first timestamp corresponding to an instant in time in which the first pose (332) was determined.

10. The method of any of claims 1-9, further comprising:
presenting, by the second mobile device (116), a first virtual object on a display (120) of the second mobile device (116) based on the coordinate-system transform (124).

11. The method of claim 1, after receiving (404), by the second mobile device (116), the data indicative of the first pose (332) of the first mobile device (104), further comprising:
determining, as the first pose (332), a pose with a first timestamp closest to a second timestamp, wherein the second timestamp corresponds to an instant in time in which the image was captured.

12. The method of claim 1, after receiving (404), by the second mobile device (116), the data indicative of the first pose (332) of the first mobile device (104), further comprising:
interpolating, based on a second timestamp corresponding to an instant in time in which the image was captured, between two poses of the sequence of poses using corresponding timestamps of the two poses, to generate the first pose (332) of the first mobile device (104).

13. A mobile device for associating device coordinate systems for a multi-person augmented-reality system, the mobile device comprising:
one or more processors; and
a non-transitory computer-readable medium storing instructions that, when executed by the one or more processors, cause the one or more processors to perform the method of any of claims 1-12.

14. A non-transitory computer-readable medium storing instructions for associating device coordinate systems for a multi-person augmented-reality system, the instructions, when executed by the one or more processors of the device of claim 13, cause the one or more processors to perform the method of any of claims 1-12.

## Patentansprüche

1. Verfahren zum Zuordnen von Vorrichtungskoordinatensystemen für ein System erweiterter Realität für mehrere Personen, wobei das Verfahren Folgendes umfasst:
Empfangen (404) durch eine zweite mobile Vorrichtung (116) von Daten, die eine erste Stellung (332) einer ersten mobilen Vorrichtung (104) angeben, wobei die erste Stellung (332) in Bezug auf ein erstes Koordinatensystem (102), das der ersten mobilen Vorrichtung (104) zugeordnet ist, definiert ist;
Bestimmen (406) durch die zweite mobile Vorrichtung (116) einer zweiten Stellung der zweiten mobilen Vorrichtung (116), wobei die zweite Stellung in Bezug auf ein zweites Koordinatensystem (118), das der zweiten mobilen Vorrichtung (116) zugeordnet ist, definiert ist;
Empfangen (408) durch die zweite mobile Vorrichtung (116) eines Bildes einer Anzeige (108) der ersten mobilen Vorrichtung (104), wobei das Bild eine Markierung (304) zeigt;
Identifizieren durch die zweite mobile Vorrichtung (116) anhand der ersten Stellung (332) und des Bildes dreidimensionaler Koordinaten (336), die der Markierung (304) zugeordnet sind, wobei die dreidimensionalen Koordinaten (336) in Bezug auf das erste Koordinatensystem (102) definiert sind;
Bestimmen (428) anhand der dreidimensionalen Koordinaten (336) einer dritten Stellung (344) der zweiten mobilen Vorrichtung (116), wobei die dritte Stellung (344) in Bezug auf das erste Koordinatensystem (102), das der ersten mobilen Vorrichtung (104) zugeordnet ist, definiert ist; und
Erzeugen (432) durch die zweite mobile Vorrichtung (116) anhand der zweiten Stellung und der dritten Stellung (344) einer Koordinatensystemtransformation (124), die Koordinaten zwischen dem ersten Koordinatensystem (102) und dem zweiten Koordinatensystem (118) abbildet;
wobei die Daten, die die erste Stellung (332) der ersten mobilen Vorrichtung (104) angeben, Daten einer Folge von Stellungen umfassen, wobei jede Stellung der Folge von Stellungen einen ersten Zeitstempel besitzt, der einem Moment in der Zeit entspricht, in dem die Stellung bestimmt wurde.

2. Verfahren nach Anspruch 1, wobei das Bestimmen der dritten Stellung (344) der zweiten mobilen Vorrichtung (116) Folgendes umfasst:
Identifizieren einer Gruppe von Merkmalspunkten von der Markierung (304); und
Erzeugen (424) einer Entsprechung zwischen der Gruppe von Merkmalspunkten und der dreidimensionalen Koordinaten (336), die der Markierung (304) zugeordnet sind.

3. Verfahren nach Anspruch 2, wobei das Identifizieren der Gruppe von Merkmalspunkten von der Markierung (304) Folgendes umfasst:
Identifizieren der Gruppe von Merkmalspunkten von der Markierung (304) unter Verwendung einer Bildverarbeitung, wobei die Bildverarbeitung eine Randdetektion und/oder einen Nicht-Maximum-Unterdrückungsvorgang und/oder einen Doppel-Schwellenwert-Vorgang und/oder einen Hysteresevorgang und/oder eine Signalverarbeitung umfasst.

4. Verfahren nach Anspruch 2 oder 3, wobei die Gruppe von Merkmalspunkten drei oder mehr Merkmalspunkte umfasst.

5. Verfahren nach einem der Ansprüche 1-4, wobei die erste Stellung (332) durch einen Rotationsvektor und einen Translationsvektor repräsentiert wird und wobei die dreidimensionalen Koordinaten (336), die der Markierung (304) zugeordnet sind, zumindest teilweise unter Verwendung der ersten Stellung (332) und von Informationen über eine Geometrie der ersten mobilen Vorrichtung (104) definiert werden.

6. Verfahren nach Anspruch 5, wobei die Informationen über die Geometrie der ersten mobilen Vorrichtung (104) in der zweiten mobilen Vorrichtung (116) im Voraus gespeichert werden oder von einem Server durch die zweite mobile Vorrichtung (116) empfangen werden.

7. Verfahren nach einem der Ansprüche 1-6, wobei ein erstes virtuelles Objekt, das durch die zweite mobile Vorrichtung (116) dargestellt wird, einem zweiten virtuellen Objekt entspricht, das durch die erste mobile Vorrichtung (104) dargestellt wird, und wobei das erste virtuelle Objekt im Wesentlichen in derselben Position und im Wesentlichen in derselben Ausrichtung innerhalb einer Umgebung wie das zweite virtuelle Objekt erscheint.

8. Verfahren nach einem der Ansprüche 1-7, wobei die Koordinatensystemtransformation (124) eine Transformationsmatrix enthält, die durch eine Rotation und eine Translation zwischen der zweiten Stellung und der dritten Stellung (344) definiert ist.

9. Verfahren nach einem der Ansprüche 1-8, wobei die erste Stellung (332) einen ersten Zeitstempel besitzt, der einem Moment in der Zeit entspricht, in dem die erste Stellung (332) bestimmt wurde.

10. Verfahren nach einem der Ansprüche 1-9, das ferner umfasst:
Darstellen durch die zweite mobile Vorrichtung (116) eines ersten virtuellen Objekts auf einer Anzeige (120) der zweiten mobilen Vorrichtung (116) anhand der Koordinatensystemtransformation (124).

11. Verfahren nach Anspruch 1, das ferner nach dem Empfangen (404) durch die zweite mobile Vorrichtung (116) der Daten, die die erste Stellung (332) der ersten mobilen Vorrichtung (104) angeben, ferner Folgendes umfasst:
Bestimmen als die erste Stellung (332) einer Stellung mit einem Zeitstempel, der am nächsten bei einem zweiten Zeitstempel liegt, wobei der zweite Zeitstempel einem Moment in der Zeit entspricht, in dem das Bild aufgenommen wurde.

12. Verfahren nach Anspruch 1, das nach dem Empfangen (404) durch die zweite mobile Vorrichtung (116) der Daten, die die erste Stellung (332) der ersten mobilen Vorrichtung (104) angeben, ferner Folgendes umfasst:
Interpolieren anhand eines zweiten Zeitstempels, der einem Moment in der Zeit entspricht, in dem das Bild aufgenommen wurde, zwischen zwei Stellungen der Folgen von Stellungen unter Verwendung entsprechender Zeitstempel der zwei Stellungen, um die erste Stellung (332) der ersten mobilen Vorrichtung (104) zu erzeugen.

13. Mobile Vorrichtung zum Zuordnen von Vorrichtungskoordinatensystemen für ein System erweiterter Realität für mehrere Personen, wobei die mobile Vorrichtung Folgendes umfasst:
einen oder mehrere Prozessoren; und
ein nicht transitorisches computerlesbares Medium, das Anweisungen speichert, die dann, wenn sie durch den einen oder die mehreren Prozessoren ausgeführt werden, bewirken, dass der eine oder die mehreren Prozessoren das Verfahren nach einem der Ansprüche 1-12 ausführen.

14. Nicht transitorisches computerlesbares Medium, das Anweisungen zum Zuordnen von Vorrichtungskoordinatensystemen für ein System erweiterter Realität für mehrere Personen speichert, wobei die Anweisungen dann, wenn sie durch den einen oder die mehreren Prozessoren der Vorrichtung nach Anspruch 13 ausgeführt werden, bewirken, dass der eine oder die mehreren Prozessoren das Verfahren nach einem der Ansprüche 1-12 ausführen.

## Revendications

1. Procédé d'association de systèmes de coordonnées de dispositifs pour un système de réalité augmentée multi-utilisateur, le procédé comprenant :
la réception (404), par un deuxième dispositif mobile (116), de données indiquant une première pose (332) d'un premier dispositif mobile (104), la première pose (332) étant définie par rapport à un premier système de coordonnées (102) associé au premier dispositif mobile (104) ;
la détermination (406), par le deuxième dispositif mobile (116), d'une deuxième pose du deuxième dispositif mobile (116), la deuxième pose étant définie par rapport à un deuxième système de coordonnées (118) associé au deuxième dispositif mobile (116) ;
la réception (408), par le deuxième dispositif mobile (116), d'une image d'un affichage (108) du premier dispositif mobile (104), l'image montrant un repère (304) ;
l'identification, par le deuxième dispositif mobile (116), sur la base de la première pose (332) et de l'image, de coordonnées tridimensionnelles (336) associées au repère (304), les coordonnées tridimensionnelles (336) étant définies par rapport au premier système de coordonnées (102) ;
la détermination (428), sur la base des coordonnées tridimensionnelles (336), d'une troisième pose (344) du deuxième dispositif mobile (116), la troisième pose (344) étant définie par rapport audit premier système de coordonnées (102) associé au premier dispositif mobile (104) ; et
la génération (432), par le deuxième dispositif mobile (116) sur la base de la deuxième pose et de la troisième pose (344), d'une transformation de système de coordonnées (124) qui établit une correspondance des coordonnées entre le premier système de coordonnées (102) et le deuxième système de coordonnées (118) ;
dans lequel les données indiquant la première pose (332) du premier dispositif mobile (104) comprennent des données d'une séquence de poses, chaque pose de la séquence de poses comprenant un premier horodatage correspondant à un instant auquel la pose a été déterminée.

2. Procédé selon la revendication 1, dans lequel la détermination de la troisième pose (344) du deuxième dispositif mobile (116) comprend :
l'identification d'un ensemble de points caractéristiques à partir du repère (304) ; et
la génération (424) d'une correspondance entre l'ensemble de points caractéristiques et les coordonnées tridimensionnelles (336) associées au repère (304).

3. Procédé selon la revendication 2, dans lequel l'identification de l'ensemble de points caractéristiques à partir du repère (304) comprend :
l'identification de l'ensemble de points caractéristiques à partir du repère (304) à l'aide d'un traitement d'image, le traitement d'image comprenant une détection des contours et/ou un processus de suppression des non-maxima et/ou un processus à double seuil et/ou un processus d'hystérésis et/ou un traitement de signal.

4. Procédé selon la revendication 2 ou 3, dans lequel l'ensemble de points caractéristiques comprend au moins trois points caractéristiques.

5. Procédé selon l'une quelconque des revendications 1 à 4, dans lequel la première pose (332) est représentée par un vecteur de rotation et un vecteur de translation, et dans lequel les coordonnées tridimensionnelles (336) associées au repère (304) sont définies, au moins en partie, à l'aide de la première pose (332) et d'informations concernant une géométrie du premier dispositif mobile (104).

6. Procédé selon la revendication 5, dans lequel les informations concernant la géométrie du premier dispositif mobile (104) sont préenregistrées dans le deuxième dispositif mobile (116) ou reçues depuis un serveur par le deuxième dispositif mobile (116).

7. Procédé selon l'une quelconque des revendications 1 à 6, dans lequel un premier objet virtuel présenté par le deuxième dispositif mobile (116) correspond à un deuxième objet virtuel présenté par le premier dispositif mobile (104), et dans lequel le premier objet virtuel apparaît, dans un environnement, dans sensiblement la même position et avec sensiblement la même orientation que celles du deuxième objet virtuel.

8. Procédé selon l'une quelconque des revendications 1 à 7, dans lequel la transformation de système de coordonnées (124) comprend une matrice de transformation définie à partir d'une rotation et d'une translation entre la deuxième pose et la troisième pose (344).

9. Procédé selon l'une quelconque des revendications 1 à 8, dans lequel la première pose (332) comprend un premier horodatage correspondant à l'instant auquel la première pose (332) a été déterminée.

10. Procédé selon l'une quelconque des revendications 1 à 9, comprenant en outre :
la présentation, par le deuxième dispositif mobile (116), d'un premier objet virtuel sur un affichage (120) du deuxième dispositif mobile (116) sur la base de la transformation de système de coordonnées (124).

11. Procédé selon la revendication 1, comprenant en outre, après la réception (404), par le deuxième dispositif mobile (116), des données indiquant la première pose (332) du premier dispositif mobile (104) : la détermination, en tant que première pose (332), d'une dont un premier horodatage est le plus proche d'un deuxième horodatage, le deuxième horodatage correspondant à un instant auquel l'image a été capturée.

12. Procédé selon la revendication 1, comprenant en outre, après la réception (404), par le deuxième dispositif mobile (116), des données indiquant la première pose (332) du premier dispositif mobile (104) : l'interpolation, sur la base d'un deuxième horodatage correspondant à un instant auquel l'image a été capturée, entre deux poses de la séquence de poses à l'aide d'horodatages correspondants des deux poses, afin de générer la première pose (332) du premier dispositif mobile (104).

13. Dispositif mobile pour l'association de systèmes de coordonnées de dispositifs pour un système de réalité augmentée multi-utilisateur, le dispositif mobile comprenant :
un ou plusieurs processeurs ; et
un support non transitoire lisible par ordinateur, stockant des instructions qui, lorsqu'elles sont exécutées par le ou les processeurs, amènent le ou les processeurs à réaliser le procédé selon l'une quelconque des revendications 1 à 12.

14. Support non transitoire lisible par ordinateur, stockant des instructions pour l'association de systèmes de coordonnées de dispositifs pour un système de réalité augmentée multi-utilisateur, les instructions, lorsqu'elles sont exécutées par le ou les processeurs du dispositif selon la revendication 13, amenant le ou les processeurs à réaliser le procédé selon l'une quelconque des revendications 1 à 12.
